# FASCICULE DE BREVET EUROPEEN

(11) **EP 2 406 602 B1**
(45) Date de publication et mention de la délivrance du brevet: **03.04.2013**
(21) Numéro de dépôt: 10701689.1
(22) Date de dépôt: 29.01.2010
(51) Int. Cl.: G01K 1/02

(54) **CONDITIONNEUR ET DISPOSITIF DE MESURES À SORTIE NUMÉRIQUE**
AUFBEREITUNGSVORRICHTUNG UND MESSEINRICHTUNG MIT DIGITALAUSGANG
CONDITIONER AND MEASURING DEVICE WITH DIGITAL OUTPUT

(30) Priorité: 10.03.2009 FR 0901097
(43) Date de publication de la demande: 18.01.2012
(73) Titulaire: THALES, 92200 Neuilly-sur-Seine (FR)
(72) Inventeur: BETTACCHIOLI, Alain, F-06150 Cannes/la/bocca (FR)
(74) Mandataire: Nguyen, Dominique
(86) Numéro de dépôt international: PCT/EP2010/051121
(87) Numéro de publication internationale: WO 2010/102857

(56) Documents cités:
- EP-A- 1 387 155
- DE-U1- 9 105 695
- FR-A- 2 726 947

## Description

La présente invention concerne un conditionneur de mesures de températures à sortie numérique et un dispositif de mesures de températures par thermocouple comportant un tel conditionneur. Elle s'applique à la mesure de températures de tout type d'équipement et en particulier dans le domaine spatial où les mesures doivent être réalisées dans un grand nombre d'endroits différents et dans des caissons conçus pour recréer des environnements vide et thermique particuliers. Un exemple de connecteur pour thermocouple est divulgué par le document EP 1387155 A, un connecteur modulaire avec un circuit électronique dans le boitier du connecteur est connu du document DE 9105695 et une rallonge électrique avec plusieurs connecteurs est connue du document FR 2726947.

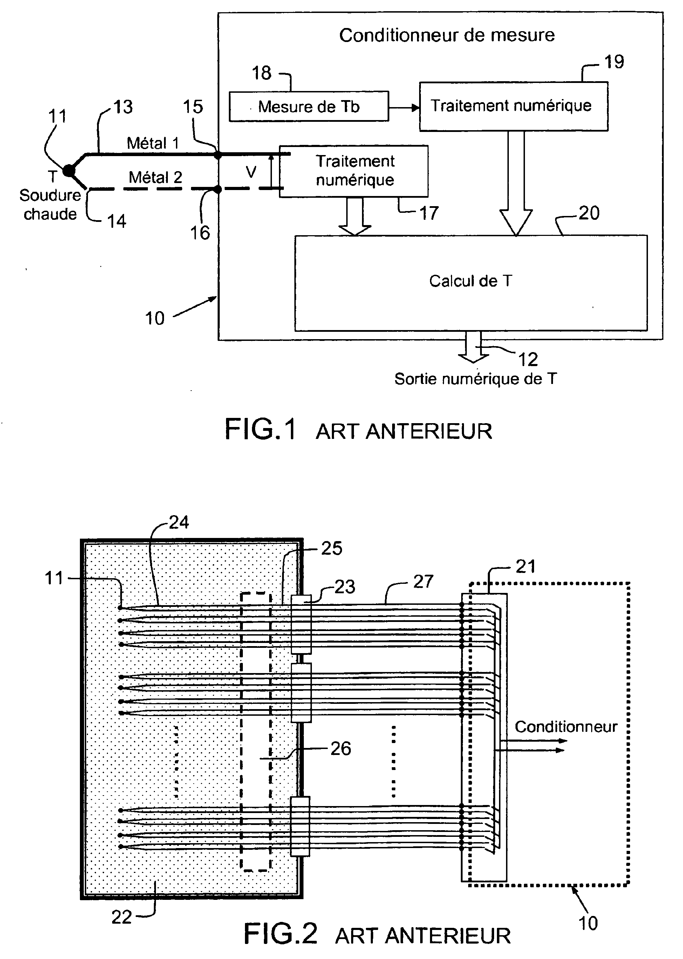

La mesure d'une température par thermocouples utilise l'effet Seebeck, ou plus précisément, la combinaison de deux lois connues sous le nom d'effet Peltier et d'effet Thomson. L'effet Peltier correspond à la variation d'une force électromotrice V qui apparaît au niveau de la jonction 11 de deux métaux différents 13, 14 lorsque la température varie tandis que l'effet Thomson correspond à la variation du potentiel électrique tout au long d'un conducteur en présence d'un gradient de température. En raison de ces deux lois et d'autres considérations physiques qui en découlent, la détermination de la température T au niveau de la jonction 11 des deux métaux 13, 14, couramment appelée « soudure chaude », doit utiliser une référence de température T_{b} pouvant être prise à 0°Celcius ou à une température prise au droit du raccordement des fils de thermocouple à un conditionneur de mesures 10. La soudure froide se trouve alors directement réalisée au niveau du bornier du conditionneur comme représenté sur la figure 1 qui représente un exemple de dispositif de détermination de la température dont le conditionneur 10 comporte une sortie 12 délivrant une valeur numérique de la température T.

Les deux fils du thermocouple 13, 14 sont connectés à deux bornes d'entrée 15, 16 du conditionneur de mesures 10. La force électromotrice V présente entre ces deux bornes d'entrée 15, 16 est fonction de la température T_{b} qui règne au niveau de ces bornes d'entrée et de la température T au niveau de la soudure chaude 11 du thermocouple.

Le conditionneur de mesures 10 comporte des moyens 18 de mesure de la température T_{b} des bornes d'entrée 15, 16 et de calcul de la tension V_{b} associée permettant de réaliser numériquement la compensation de soudure froide. Le conditionneur de mesures réalise d'une part, un traitement numérique 17 de la tension V qui est représentative de la combinaison des températures T et T_{b}, et d'autre part, un traitement numérique 19 de la tension V_{b} qui est représentative de la seule température T_{b}. A l'issue de ces deux traitements numériques, la détermination 20 de la température T est réalisée par conversion des valeurs numériques des tensions en températures. La conversion peut s'effectuer de manière connue, soit à partir d'un polynôme d'étalonnage standard soit à partir d'un étalonnage spécifique du thermocouple.

Il existe des conditionneurs de mesures comportant plusieurs entrées reliées à un multiplexeur 21 auquel sont reliés les moyens d'amplification et de numérisation de la force électromotrice V correspondant à la température T de la soudure chaude. Les différentes entrées permettent de connecter plusieurs thermocouples en parallèle aux bornes d'entrée du conditionneur et de réaliser avec le même conditionneur, plusieurs mesures de températures à différents endroits de mesure.

Dans le cas d'une application au domaine spatial, par exemple dans le cadre des essais sur un satellite ou sur des équipements destinés à être embarqués sur un satellite, il est généralement nécessaire de connecter un très grand nombre de thermocouples en parallèle, typiquement jusqu'à plus de 1500 thermocouples, sur les bornes d'entrée d'un même conditionneur de mesures, comme représenté par exemple sur la figure 2. Ces essais sont en outre réalisés dans des caissons 22 d'essais conçus pour recréer des environnements vide et thermique particuliers, appelés caissons vide thermique, qui nécessitent l'utilisation de traversées de cloison 23 étanches pour le raccordement des fils des thermocouples 24 dont la soudure chaude 11 est placée en des points de mesure sur des équipements situés à l'intérieur du caisson 22 vide thermique au conditionneur de mesure 10 placé à l'extérieur du caisson 22. Ces traversées de cloison 23 étanches comportent généralement des broches de connexions électriques intégralement réalisées dans des métaux très proches de ceux qui composent les fils des thermocouples 24. Chaque caisson 22 vide thermique peut comporter plusieurs traversées de cloison 23 et chaque traversée de cloison peut permettre le passage de plusieurs dizaines de thermocouples. Par ailleurs, ces essais nécessitent généralement d'utiliser des thermocouples dont les fils doivent être de très grande longueur, typiquement jusqu'à plus d'une dizaine de mètres, et il est courant de devoir utiliser des rallonges 25 internes au caisson 22 vide thermique pour prolonger les fils des thermocouples 24 jusqu'aux traversées de cloisons 23. Ces rallonges 25 internes peuvent être réalisées avec des câbles dits d'extension lorsqu'ils sont réalisés avec des matériaux strictement identiques à ceux qui composent les fils de chaque thermocouple, ce qui est le cas des métaux issus de la même coulée métallurgique, ou des câbles dits de compensation lorsqu'ils sont réalisés dans des matériaux de pureté et de composition chimique très proches de ceux qui composent le thermocouple dédié à la mesure. De telles précautions permettent de s'affranchir des forces électromotrices parasites générées par les jonctions supplémentaires au niveau du raccordement des fils du thermocouple avec les fils d'une rallonge. Par ailleurs, pour garantir la même température aux extrémités de toutes les connexions, les jonctions supplémentaires sont placées dans une boite isotherme 26 placée à l'intérieur du caisson 22 vide thermique. Enfin, des câbles de compensation externes 27 sont utilisés pour relier la sortie des traversées de cloison 23 au conditionneur de mesures 10.

Ce dispositif de mesures complexe, encombrant et coûteux à réaliser, nécessite des temps d'instrumentation et des coûts de main d'oeuvre importants et peut entraîner des risques de fuites au niveau des traversées de cloison, des problèmes de fiabilité des mesures et des difficultés de maintenance. En outre, le conditionneur lui-même est constitué d'un ensemble de baies d'acquisition des mesures très volumineuses.

Pour s'affranchir des traversées de cloisons étanches et des câbles de compensation externes, il est possible de placer le dispositif de multiplexage ou l'ensemble du conditionneur à l'intérieur du caisson vide thermique, mais cela engendre des problèmes de dégradations et de pannes intermittentes ou permanentes des composants électroniques de ces dispositifs dus notamment à l'oxydation des connexions.

L'invention a pour but de résoudre ces problèmes et de proposer un conditionneur de mesures de températures à sortie numérique et un dispositif de mesures de températures par thermocouple à sortie numérique pouvant être utilisés dans un caisson vide thermique sans oxydation, permettant de réduire le temps d'instrumentation et les coûts de main d'oeuvre et d'améliorer la fiabilité des mesures dans une large gamme de températures quel que soit le nombre de températures à acquérir.

Pour cela, l'invention concerne un conditionneur de mesures de températures à sortie numérique comportant deux entrées aptes à être reliées à deux fils d'un thermocouple, caractérisé en ce qu'il est constitué d'un seul circuit micro-électronique intégré spécialisé ASIC regroupant des moyens de conditionnement et de numérisation de mesures de températures, le circuit intégré étant encapsulé dans un connecteur comportant deux zones de connexions complémentaires, respectivement femelle et mâle, destinées à réaliser des interconnexions avec d'autres connecteurs et en ce que le circuit ASIC comporte une sortie reliée aux deux zones de connexions complémentaires par l'intermédiaire de lignes électriques internes.

Avantageusement, le circuit ASIC est disposé dans une zone centrale du connecteur, entre les deux zones de connexions complémentaires.

Avantageusement, le connecteur peut comporter en outre, dans la zone centrale contenant l'ASIC, un passage transversal débouchant de part et d'autre du connecteur.

Avantageusement, le circuit ASIC comporte une adresse spécifique reprogrammable et des paramètres internes reprogrammables.

Avantageusement, le circuit ASIC comporte en outre au moins une résistance de réchauffage de l'ASIC activée uniquement en-dessous d'une température critique de l'ASIC.

L'invention concerne également un dispositif de mesure de températures par thermocouple à sortie numérique, caractérisé en ce qu'il comporte au moins un conditionneur de mesures constitué d'un circuit ASIC encapsulé dans un connecteur, le conditionneur comportant une entrée reliée à un thermocouple et une sortie connectée à un bus de communication numérique et d'alimentation en énergie électrique.

Le connecteur peut être directement moulé sur le bus ou être un connecteur indépendant raccordé sur un connecteur moulé sur le bus.

Avantageusement, le bus comporte au moins deux lignes électriques traversant un passage transversal d'au moins un connecteur moulé sur le bus, le connecteur moulé comportant un conditionneur ASIC apte à être relié à un thermocouple et chaque ligne électrique du bus étant reliée à la sortie du conditionneur ASIC.

Préférentiellement, le bus comporte plusieurs connecteurs moulés régulièrement espacés.

Avantageusement, le dispositif comporte au moins deux connecteurs indépendants comportant chacun un conditionneur ASIC encapsulé apte à être relié à un thermocouple, les deux connecteurs indépendants étant raccordés entre eux par leurs zones de connexion complémentaires et formant une chaine linéaire reliée à un connecteur moulé sur le bus.

Préférentiellement, au moins l'un des connecteurs moulés sur le bus comporte un conditionneur ASIC encapsulé apte à être relié à un thermocouple.

Avantageusement, le dispositif peut comporter une ou plusieurs chaines linéaires de connecteurs indépendants, chaque chaine linéaire étant respectivement raccordée à un connecteur moulé du bus.

En cas de besoin, le bus peut comporter une ou plusieurs rallonges sur chacune desquelles est moulé au moins un connecteur additionnel, le connecteur moulé de la rallonge pouvant être connecté directement sur un connecteur moulé du bus ou par l'intermédiaire d'un ou de plusieurs connecteurs indépendants.

Avantageusement, un ou plusieurs des connecteurs moulés sur la rallonge comporte un conditionneur ASIC encapsulé apte à être relié à un thermocouple.

Avantageusement, la rallonge comporte au moins deux lignes électriques.

Avantageusement, les connecteurs incluant les conditionneurs ASIC encapsulés, les thermocouples reliés aux connecteurs et le bus de communication peuvent être placés dans un caisson vide thermique sans dégazer.

Avantageusement, le bus est raccordé à un ordinateur par l'intermédiaire d'un convertisseur de protocole.

L'invention présente les avantages de raccourcir tout ou partie des thermocouples, de supprimer tous les câbles de compensation et toutes les traversées de caisson spécifiques ainsi que les boîtes isothermes des caissons dédiées aux raccords des câbles de compensation et l'ensemble des baies d'acquisition des mesures.

D'autres particularités et avantages de l'invention apparaîtront clairement dans la suite de la description donnée à titre d'exemple purement illustratif et non limitatif, en référence aux dessins schématiques annexés qui représentent :
- figure 1 : un exemple de dispositif de mesures de températures dont le conditionneur comporte une sortie délivrant une valeur numérique de la température, selon l'art antérieur;
- figure 2 : un exemple de dispositif de mesures de températures comportant un grand nombre de thermocouples connectés sur les bornes d'entrée d'un même conditionneur de mesures pour une application spatiale, selon l'art antérieur;
- figure 3 : un exemple de dispositif de mesures de températures comportant un thermocouple relié à un conditionneur encapsulé dans un connecteur, selon l'invention ;
- figure 4 : un exemple schématique d'un dispositif de mesures de températures comportant trois thermocouples respectivement associés à trois ASIC connectés entre eux, selon l'invention ;
- figure 5a : un exemple schématique d'un dispositif de mesures de températures comportant un réseau de thermocouples, selon l'invention ;
- figure 5b : une vue schématique en éclaté d'un exemple de raccordement de rallonges et de connecteurs équipés de thermocouples sur un bus de communication, selon l'invention ;
- figure 6 : un exemple de bus de communication, selon l'invention ;
- figures 7a et 7b : deux vues en perspective, respectivement des zones de connexion mâle et femelle, d'un exemple de connecteur d'un dispositif de mesures de températures, selon l'invention ;
- figures 7c et 7d : deux vues schématiques, respectivement de dessous et en coupe, d'un exemple de connecteur comportant un passage transversal adapté au passage d'un bus de communication, selon l'invention;

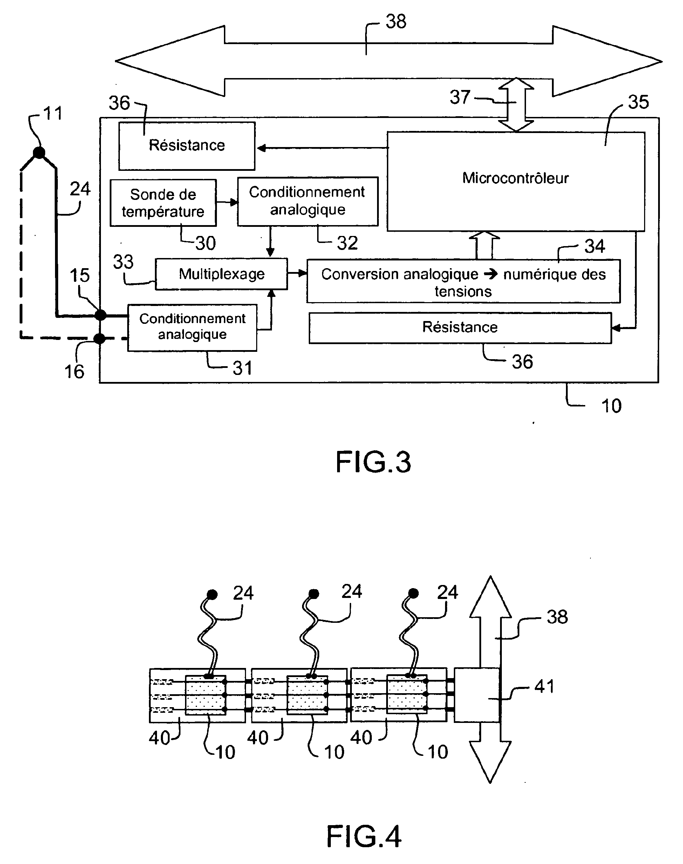

Le dispositif représenté schématiquement sur la figure 3 comporte un thermocouple 24 relié à un conditionneur 10 de mesures de température. Le conditionneur de mesures 10 est réalisé sous la forme d'un seul circuit micro-électronique intégré spécialisé de type ASIC, regroupant l'ensemble des moyens de calcul et de numérisation des températures montés sur une seule puce, par exemple une puce de silicium. En particulier, le circuit microélectronique comporte deux bornes d'entrée 15, 16 destinées à recevoir les deux fils d'un thermocouple 24, une sonde de température 30 permettant de mesurer la température T_{b} des bornes d'entrée 15, 16, des moyens 31, 32 de conditionnement analogique des valeurs mesurées raccordés à un microcontrôleur 35 par l'intermédiaire d'un moyen de multiplexage 33 et d'un convertisseur analogique-numérique 34. Le microcontrôleur 35 comporte une sortie 37 destinée notamment à délivrer la valeur de la température T correspondant à la soudure chaude 11 du thermocouple 24 éventuellement connecté sur les bornes d'entrée 15, 16 du conditionneur 10.

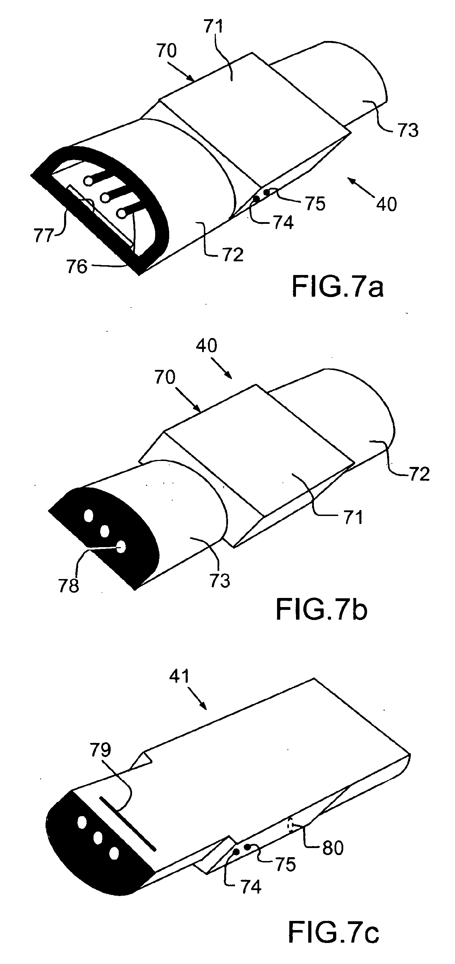

Le circuit conditionneur ASIC 10 est encapsulé dans un connecteur 40, représenté par exemple sur les figures 7a et 7b, auquel est relié le thermocouple 24. La liaison entre le thermocouple 24 et l'ASIC 10 encapsulé dans le connecteur 40 peut par exemple être réalisée par un procédé de soudure par ultrasons sur deux bornes métalliques 74, 75 du connecteur 40 reliées aux deux bornes d'entrée 15, 16 du conditionneur 10. Préférentiellement, le circuit ASIC comporte une adresse spécifique reprogrammable et/ou des paramètres de conversion de force électromotrice en température reprogrammables. Le connecteur 40 contenant l'ASIC comporte deux zones de connexions 72, 73 respectivement femelle et mâle permettant de réaliser des interconnexions sur un réseau spécifique de mesures, d'acquisition et de traitement des données acquises. Ainsi, le raccordement ou le débranchement du thermocouple 24 sur le réseau peut se faire à tout moment et de façon très simple.

Comme un tel ASIC ne peut pas fonctionner au-dessous d'une certaine température de seuil en raison des propriétés physiques des semiconducteurs, préférentiellement, une ou plusieurs résistances électriques 36 dont l'alimentation est pilotée par l'ASIC sont ajoutées sur le substrat de l'ASIC pour permettre de le réchauffer en cas de besoin. Ainsi, lorsque la température de l'ASIC, placé dans d'un environnement froid, approche de la température de seuil, l'ASIC déclenche l'alimentation des résistances électriques par un courant électrique. Le dégagement de chaleur provoqué par le passage du courant dans les résistances permet de maintenir la température de l'ASIC au-dessus du seuil. La présence des résistances permettent donc à l'ASIC de toujours fonctionner à des températures convenables, c'est-à-dire au-dessus du seuil de température, lorsque l'environnement susceptible de l'influencer est plus froid. Néanmoins, ces résistances n'interviennent en aucune façon dans le fonctionnement de l'ASIC. Classiquement le seuil de température est compris entre -20°C et - 70°C selon les technologies employées et les performances atteintes avec ces technologies.

L'alimentation électrique du conditionneur est transmise par l'intermédiaire d'un bus de communication numérique 38, soit par une ligne spécifique du bus de communication numérique 38 soit, par une ligne de transmission de données du bus.

Certains connecteurs 41 sont moulés directement sur le bus et d'autres connecteurs 40 sont indépendants. Dans tous les cas, chaque connecteur 40, 41, moulé sur le bus ou indépendant, possède un conditionneur ASIC 10 et présente des bornes métalliques 74, 75 de connexion permettant de raccorder un thermocouple 24. Le bus de communication 38 permet les échanges d'informations numériques et peut comporter des connexions additionnelles avec tout autre type de capteur différent d'un thermocouple. Le bus de communication 38 est destiné à être relié à un ordinateur 43 éventuellement par l'intermédiaire d'un convertisseur 39 de protocole de communication. Dans le cas où des mesures sont réalisées dans un caisson 22 vide thermique, le convertisseur de protocole 39 peut être placé à l'extérieur du caisson 22 et relié au bus de communication 38 placé à l'intérieur du caisson par l'intermédiaire d'une traversée 23 de cloison étanche. Des convertisseurs de protocole additionnels peuvent être utilisés et placés en des endroits différents du bus de communication 38 pour réaliser une redondance puisque les mêmes informations sont disponibles sur chaque tronçon du bus de communication 38. L'ordinateur 43 permet de piloter la transmission des échanges sur le bus de communication 38, de sélectionner l'adresse d'un thermocouple 24, de traiter les informations numériques émises par le conditionneur 10 qui répond alors à l'adresse interrogée par l'ordinateur 43, de commander la modification des valeurs de l'adresse ou des valeurs des paramètres de conversion internes de l'ASIC correspondant à cette adresse. Les informations transmises sur le bus de communication 38 peuvent être également les mesures de température de la soudure chaude 11 du thermocouple 24 et/ou les températures relatives à l'ASIC 10 puisque, en raison de la technique de mesure employée, sa température est obligatoirement déterminée pour pouvoir calculer celle de la soudure chaude du thermocouple 24. L'ASIC 10 prend en charge de façon autonome la commande de la résistance 36 de réchauffage interne pour que la température de l'ASIC 10 reste toujours dans une zone de température acceptable pour son bon fonctionnement mais, pour cette opération, l'ordinateur 43 peut devenir maître. En fonctionnement autonome, lorsque la température d'un ASIC 10 tombe au-dessous d'un premier seuil, appelé seuil bas, de l'ordre de -60°C par exemple, l'ASIC 10 commande la résistance de réchauffage jusqu'à ce que sa température atteigne un deuxième seuil, appelé seuil haut, de l'ordre par exemple de -20°C. L'une des bornes de la résistance 36 étant à un potentiel donné, tel que par exemple la masse électrique de l'ASIC, la puissance nécessaire à l'alimentation de la résistance de réchauffage 36 peut être fournie à partir d'un circuit d'alimentation de l'ASIC via un interrupteur électronique, non représenté, piloté par le microcontrôleur 35 dudit ASIC 10.

L'encapsulation de l'ASIC dans le connecteur peut être réalisée par exemple par une technique courante permettant d'améliorer la solidité des connexions de l'ASIC à des équipements extérieurs tels qu'un thermocouple ou un bus de communication, ou un autre connecteur, et selon laquelle l'ASIC est monté sur un support de type circuit imprimé PCB (Printed Circuit Board) ou céramique par exemple. Les sorties de l'ASIC sont reliées à des bornes de connexions dédiées montées sur le support. Avant d'être moulé dans le connecteur, le support de l'ASIC peut être lui-même moulé dans un matériau de type résine tel que par exemple du glob-top ou encapsulé grâce à une technique HRL (High Reliability Level) ou par toute autre technique adaptée selon l'application envisagée. D'autres bornes de connexions situées à la périphérie du support sont aménagées pour le raccordement de l'ASIC à un thermocouple, ou à un bus de communication ou à un autre connecteur. Les matériaux utilisés pour mouler le connecteur et éventuellement un câble contenant un bus de communication sont tels qu'ils ne dégazent pas sous vide. L'ensemble des matériels utilisés doivent satisfaire la norme européenne ECSS-Q-70-02A avec un CVCM (collected volatile condensable material) inférieur à 0.1 % pour les satellites de télécommunications ou inférieur à 0.01 pour les applications scientifiques, un RML (recovered mass loss) inférieur à 1 % pour les satellites de télécommunication ou inférieur à 0.1 % pour les applications scientifiques et un TML (total mass loss) inférieur à 0.1 % pour les satellites de télécommunications ou inférieur à 0.01 pour les applications scientifiques. Pour satisfaire l'ensemble de ces contraintes, la gaine et les parties moulées peuvent être réalisées avec un matériau plastique de type polytétrafluoroéthylène PTFE de type TEFZEL (marque déposée) par exemple.

Comme représenté sur l'exemple de la figure 4, plusieurs connecteurs 40 indépendants contenant chacun un conditionneur ASIC 10 encapsulé et un thermocouple 24 associé peuvent être connectés entre eux, les uns à la suite des autres en série et former ainsi une chaine linéaire 51. La chaine 51 représentée sur la figure 4 comporte trois connecteurs incorporant chacun un ASIC et associés respectivement à trois thermocouples, seul le premier connecteur 40 étant raccordé à un connecteur 41 moulé sur le bus de communication 38.

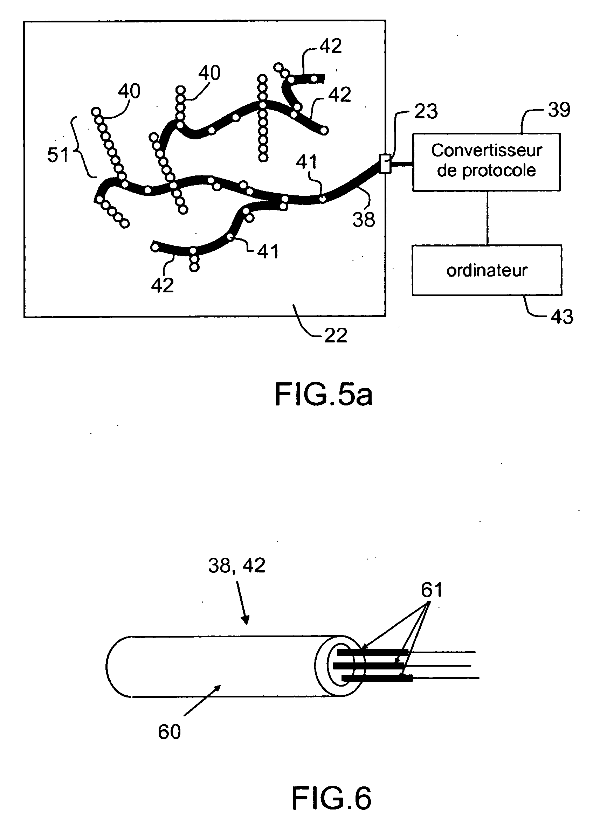

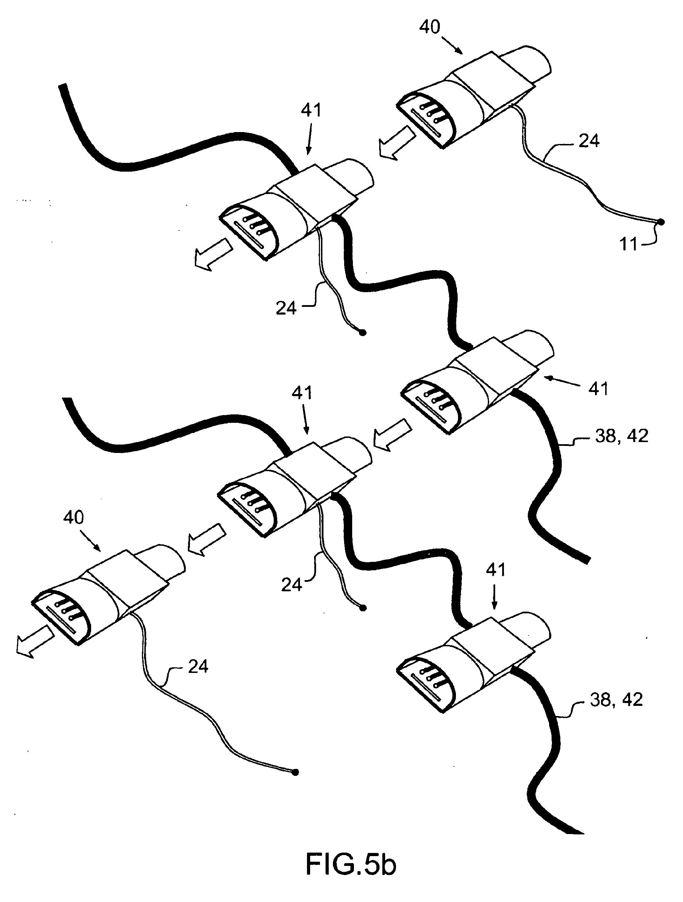

Avantageusement, pour pouvoir réaliser une instrumentation du bus 38 de façon simple et permettre le raccordement en parallèle de plusieurs chaines de thermocouples sur le bus, plusieurs connecteurs 41 sont moulés à intervalles réguliers sur toute la longueur du bus. De même, il est également possible de raccorder des bus de communication secondaires 42 sur le bus de communication principal 38 ou sur un connecteur indépendant 40 incluant un ASIC et raccordé au bus principal ou à un autre bus secondaire. Les bus secondaires sont eux-mêmes équipés de connecteurs moulés 41 et forment des rallonges sur lesquelles peuvent également être raccordés des thermocouples additionnels et des connecteurs indépendants 40 additionnels. Certaines rallonges peuvent être équipées de connecteurs ne contenant pas d'ASIC. Il est ainsi possible de réaliser un réseau comportant un grand nombre de thermocouples 24 de mesure associés chacun à un conditionneur ASIC 10 encapsulé dans un connecteur 40, 41, tous les thermocouples 24 du réseau étant reliés, par l'intermédiaire d'un connecteur ASIC 10, à un bus de communication 38, 42 soit par une connexion directe sur le bus 38, soit par l'intermédiaire d'un autre thermocouple associé à un connecteur ASIC ou d'une chaine 51 de plusieurs thermocouples associés chacun à un connecteur ASIC ou d'une rallonge 42 du bus de communication 38. La figure 5 montre un exemple schématique d'un tel réseau.

Comme représenté sur l'exemple de la figure 6, le bus de communication 38 est un câble blindé électriquement comportant par exemple une première ligne électrique filaire dédiée à la masse, une deuxième ligne dédiée à l'alimentation en énergie électrique du thermocouple et du conditionneur associé, et une troisième ligne dédiée à la circulation des informations numériques. Les lignes filaires 61 sont torsadées, blindées et insérées dans une gaine électrique externe 60. Le nombre de lignes filaires du câble n'est pas limité à trois. Notamment, les fils dédiés à l'alimentation et à la circulation des données pourraient être confondus. Par ailleurs, pour améliorer la sécurité de fonctionnement en cas de panne, une partie ou la totalité de ces fils peut être doublée de façon à permettre une redondante.

Les figures 7a et 7b sont des vues en perspectives montrant respectivement les zones de connexion femelle et mâle d'un exemple de connecteur, selon l'invention. Tous les connecteurs du dispositif de mesures comportant un capot délimitant une zone centrale 71 et deux zones de connexion 73, 72, respectivement mâle et femelle, situées de part et d'autre de la zone centrale 71, afin de permettre des interconnexions simples et sans limite en nombré.

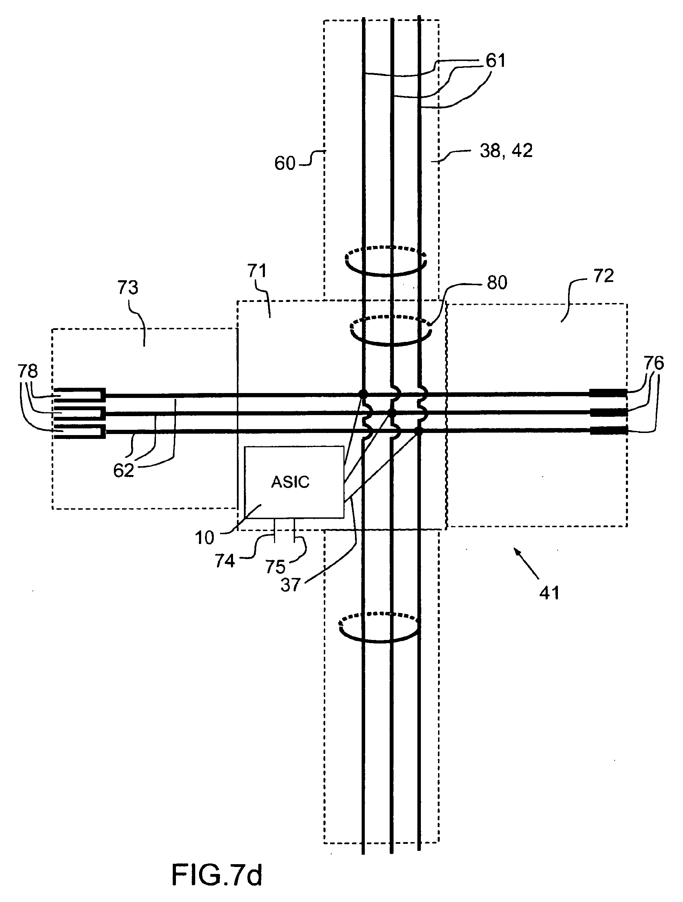

Les connecteurs 40 indépendants comportent tous un conditionneur ASIC 10 encapsulé dans la zone centrale 71 et deux bornes métalliques 74, 75 reliées à l'ASIC et débouchant sur la surface externe du capot 71 permettant de raccorder deux fils d'un thermocouple 24. Certains connecteurs 41 moulés sur le bus 38 et les rallonges 42 peuvent ne pas comporter d'ASIC. La sortie 37 du conditionneur ASIC est reliée aux deux zones de connexions complémentaires 72, 73 par l'intermédiaire de lignes électriques internes 62. Les connecteurs 41 moulés sur le bus 38 ou sur des rallonges 42 de bus comportent en outre un passage transversal 80 pratiqué dans la zone centrale 71 permettant le raccordement des fils 61 du câble constituant le bus 38 ou une rallonge 42 du bus 38, comme représenté par exemple sur la vue en coupe de la figure 7d. La zone de connexion femelle 72 est creuse et comporte à l'intérieur du capot 71, des broches métalliques 76 et une rainure 77 aménagée dans la surface interne du capot 71 destinée à accueillir un ergot 79 complémentaire d'une zone mâle 73 d'un autre connecteur 40, 41. Le nombre de broches métalliques 76 est égal au nombre de fils 61 du bus de communication. La zone de connexion mâle 73 est pleine, de forme complémentaire à celle de la zone de connexion femelle 72 et comporte des tubes creux 78 métalliques de forme complémentaire des broches 76 de la partie femelle72. Comme représenté par exemple sur la vue de dessous de la figure 7c, la surface externe du capot 71 de la zone de connexion mâle 73 comporte un ergot saillant 79 destiné à coopérer avec la rainure interne 77 d'une zone de connexion femelle 72 d'un autre connecteur 40, 41 pour clipser et verrouiller les deux connecteurs ensembles et permettre une liaison électrique correcte entre les tubes creux 78 et les broches 76 des zones de connexion respectives des deux connecteurs. Les montages et démontages sont aisés et réversibles sans limitation autre que celle engendrée par l'usure naturelle résultant de l'utilisation et/ou des manipulations des différents connecteurs.

Pour permettre une utilisation sous vide, les broches 76 et les tubes creux 78 des connecteurs 40, 41 ainsi que les fils 61 du bus de communication 38 et des rallonges 42 du bus sont avantageusement réalisés dans un métal inoxydable ou rendu inoxydable par un dépôt d'un revêtement sous vide. Le matériau du revêtement déposé peut être par exemple du rhodium, de l'or ou du nickel recouvert d'or. Le matériau du capot 70 des connecteurs 40, 41 et des gaines externes 60 du bus 38 et des rallonges 42 du bus est choisi parmi les matériaux qui ne dégazent pas sous vide et ne contiennent aucun élément pouvant polluer le caisson ou le matériel testé. On pourra par exemple choisir du téflon et éviter le PVC, le zinc, le cadmium et le mercure qui sont proscrits lors des essais sous vide thermique spatiaux en raison de la pollution qu'ils engendrent sous vide. En outre, ces matériaux sont choisis en fonction des contraintes de températures hautes ou cryogéniques et éventuellement des contraintes de radiations lorsqu'ils sont placés sur un équipement en vol dans l'espace, tel qu'un satellite par exemple.

Les échanges d'informations telles que la programmation des paramètres internes d'un conditionneur 10 associé à un thermocouple 24, ou telles que l'acquisition et la transmission des mesures de températures ou des mesures réalisées par d'autres types de capteurs reliés au bus de communication 38, ou à une rallonge 42, sont réalisées en série et commandés par l'ordinateur 43 par l'intermédiaire du convertisseur de protocole 39. Le convertisseur de protocole 39 réalise la conversion entre le protocole de communication spécifique du conditionneur ASIC 10 et le protocole de communication de l'ordinateur 43, par exemple de type USB, ou USB2, ou IEEE488, ou tout autre standard. Parmi les paramètres internes du conditionneur 10 il y a notamment les coefficients du polynôme d'étalonnage spécifique du thermocouple 24 ou du polynôme standard permettant la conversion des valeurs de forces électromotrices mesurées par le thermocouple 24 en valeurs de températures. Ces paramètres étant spécifiques à chaque type de thermocouple, il est nécessaire de reprogrammer ces paramètres en cas de connexion d'un thermocouple de type différent au même conditionneur. La modification de ces paramètres est également commandée par le calculateur 43 en utilisant un code particulier prédéterminé. Un autre paramètre interne du conditionneur 10 est l'adresse spécifique affectée au thermocouple 24 par l'utilisateur. Cette adresse peut également être modifiée. Cette adresse spécifique permet à l'ensemble des thermocouples d'être connectés sur un même réseau de communication et de dialoguer avec le calculateur sans occasionner de diaphonie. Le risque de diaphonie n'est possible que dans le cas d'une erreur de programmation de l'adresse d'un conditionneur auquel aurait été attribuée la même adresse qu'un autre conditionneur. Pour parer à ce risque, les ASIC sont tous électriquement protégés au cas où plusieurs d'entre eux émettent des données simultanément.

Le calculateur 43 pilote les échanges des informations sur le bus de communication 38 et ses rallonges 42. Sous la commande du calculateur 43, pour interroger un thermocouple 24 particulier, le convertisseur de protocole 39 envoie l'adresse du conditionneur 10 associé au thermocouple 24 correspondant. Le conditionneur 10 du thermocouple 24 interrogé renvoie alors, sous la forme d'un protocole numérique série, les informations relatives à la température de l'ASIC et à la température mesurée au moyen du thermocouple. La connaissance de la valeur de la température de l'ASIC intervient dans le calcul de la température correspondant à la mesure réalisée par le thermocouple. Par ailleurs, l'ASIC réalise une comparaison de sa température avec deux seuils, respectivement appelés seuil haut et seuil bas. Si la température de l'ASIC est inférieure au seuil bas, l'ASIC commande son réchauffage en alimentant la ou les résistances 36 jusqu'à ce que sa température dépasse le seuil haut. Avantageusement, l'utilisation de codes particuliers lors de l'émission de l'adresse sur le bus de communication 38 peut permettre d'obtenir différentes informations additionnelles ou les valeurs de paramètres stockés ou calculés dans le conditionneur 10 correspondant à l'adresse sélectionnée ou peut permettre de déclencher ou de stopper le fonctionnement de la résistance 36 de l'ASIC.

Bien que l'invention ait été décrite en liaison avec des modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention comme définie par les revendications.

## Revendications

1. Conditionneur de mesures de températures comportant deux entrées (74, 75) aptes à être reliées à deux fils d'un thermocouple, le conditionneur étant constitué d'un seul circuit micro-électronique comportant des moyens de conditionnement (30, 31, 32, 33, 35) de mesures de températures, le circuit micro-électronique étant encapsulé dans un connecteur (40, 41), **caractérisé en ce que** :
- Le conditionneur de mesures de températures est à sortie numérique,
- le circuit micro-électronique est un circuit intégré spécialisé ASIC (10) et regroupe lesdits moyens de conditionnement (30, 31, 32, 33, 35) de mesures de températures et des moyens de numérisation (34) de mesures de températures,
- le circuit intégré spécialisé ASIC (10) comporte deux zones de connexions complémentaires (72, 73), respectivement femelle et mâle, destinées à réaliser des interconnexions avec d'autres connecteurs
- le circuit intégré spécialisé ASIC (10) comporte une sortie (37) reliée aux deux zones de connexions complémentaires par l'intermédiaire de lignes électriques internes (62).

2. Conditionneur selon la revendication 1, **caractérisé en ce que** le circuit ASIC (10) est disposé dans une zone centrale (71) du connecteur (40, 41), entre les deux zones de connexions complémentaires (72, 73).

3. Conditionneur selon la revendication 2, **caractérisé en ce que** le connecteur (41) comporte en outre, dans la zone centrale (71) contenant l'ASIC, un passage transversal (80) débouchant de part et d'autre du connecteur (41).

4. Conditionneur selon l'une des revendications précédentes, **caractérisé en ce que** le circuit ASIC (10) comporte une adresse spécifique reprogrammable et des paramètres internes reprogrammables.

5. Conditionneur selon l'une des revendications précédentes, **caractérisé en ce que** le circuit ASIC (10) comporte en outre au moins une résistance (36) de réchauffage de l'ASIC activée uniquement en-dessous d'une température critique de l'ASIC.

6. Dispositif de mesure de températures par thermocouple à sortie numérique **caractérisé en ce qu'**il comporte au moins un conditionneur (10) de mesures constitué d'un circuit ASIC encapsulé dans un connecteur (40, 41) selon l'une quelconque des revendications précédentes, le conditionneur (10) comportant une entrée (15, 16) reliée à un thermocouple (24) et une sortie (37) connectée à un bus (38) de communication numérique et d'alimentation en énergie électrique.

7. Dispositif selon la revendication 6, **caractérisé en ce que** le connecteur (41) est moulé sur le bus (38).

8. Dispositif selon la revendication 6, **caractérisé en ce que** le connecteur (40) est un connecteur indépendant raccordé sur un connecteur (41) moulé sur le bus (38).

9. Dispositif selon l'une des revendications 7 ou 8, **caractérisé en ce que** le bus (38) comporte au moins deux lignes électriques (61) traversant un passage transversal (80) d'au moins un connecteur (41) moulé sur le bus (38), le connecteur moulé (41) comportant un conditionneur ASIC (10) apte à être relié à un thermocouple (24) et chaque ligne électrique du bus étant reliée à la sortie (37) du conditionneur ASIC (10).

10. Dispositif selon la revendication 9, **caractérisé en ce que** le bus (38) comporte plusieurs connecteurs moulés (41) régulièrement espacés.

11. Dispositif selon la revendication 10, **caractérisé en ce qu'**il comporte au moins deux connecteurs indépendants (40) comportant chacun un conditionneur ASIC (10) encapsulé apte à être relié à un thermocouple (24), les deux connecteurs indépendants étant raccordés entre eux par leurs zones de connexion complémentaires (72, 73) et formant une chaine linéaire (51) reliée à un connecteur (41) moulé sur le bus (38).

12. Dispositif selon l'une des revendications 10 ou 11, **caractérisé en ce qu'**au moins l'un des connecteurs (41) moulés sur le bus (38) comporte un conditionneur ASIC (10) encapsulé apte à être relié à un thermocouple (24).

13. Dispositif selon l'une des revendications 11 ou 12, **caractérisé en ce qu'**il comporte au moins deux chaines linéaires (51) de connecteurs indépendants (40), chaque chaine linéaire (51) étant respectivement raccordée à un connecteur moulé (41) sur le bus (38).

14. Dispositif selon l'une des revendications 7 à 13, **caractérisé en ce que** le bus (38) comporte au moins une rallonge (42) sur laquelle est moulé au moins un connecteur (41) additionnel, le connecteur moulé de la rallonge (42) étant connecté directement sur un connecteur moulé (41) sur le bus (38).

15. Dispositif selon l'une des revendications 7 à 13, **caractérisé en ce que** le bus (38) comporte au moins une rallonge (42) sur laquelle est moulé au moins un connecteur (41) additionnel, le connecteur moulé sur la rallonge (42) étant connecté au bus (38) par l'intermédiaire d'au moins un connecteur indépendant (40).

16. Dispositif selon l'une des revendications 14 ou 15, **caractérisé en ce qu'**au moins l'un des connecteurs (41) moulés sur la rallonge (42) comporte un conditionneur ASIC (10) encapsulé apte à être relié à un thermocouple (24).

17. Dispositif selon l'une des revendications 14 à 16, **caractérisé en ce que** la rallonge (42) comporte au moins deux lignes électriques.

18. Dispositif selon l'une des revendications 6 à 13, **caractérisé en ce que** les connecteurs (40, 41) incluant les conditionneurs ASIC (10) encapsulés, les thermocouples (24) reliés aux connecteurs (40, 41) et le bus de communication (38) sont placés dans un caisson (22) vide thermique.

19. Dispositif selon l'une des revendications 6 à 18, **caractérisé en ce que** le bus (38) est raccordé à un ordinateur (43) par l'intermédiaire d'un convertisseur de protocole (39).

## Claims

1. A conditioner for temperature measurements comprising two inputs (74, 75) that are designed to be connected to two wires of a thermocouple, said conditioner being constituted by a single micro-electronic circuit comprising means (30, 31, 32, 33, 35) for conditioning temperature measurements, said micro-electronic circuit being encapsulated in a connector (40, 41), **characterised in that**:
- said conditioner for temperature measurements is of the digital output type;
- said micro-electronic circuit is a specialised ASIC integrated circuit (10) and groups said means (30, 31, 32, 33, 35) for conditioning temperature measurements and means (34) for digitising temperature measurements;
- said specialised ASIC integrated circuit (10) comprises two zones of additional connections (72, 73), respectively female and male, that are designed to inter-connect with other connectors;
- said specialised ASIC integrated circuit (10) comprises an output (37) that is connected to said two additional connection zones by means of internal electric lines (62).

2. The conditioner according to claim 1, **characterised in that** said ASIC circuit (10) is arranged in a central zone (71) of said connector (40, 41) between said two additional connection zones (72, 73).

3. The conditioner according to claim 2, **characterised in that** said connector (41) further comprises, in the central zone (71) that contains said ASIC, a transversal passage (80) that opens out on either side of said connector (41).

4. The conditioner according to any one of the preceding claims, **characterised in that** said ASIC circuit (10) comprises a specific reprogrammable address and reprogrammable internal parameters.

5. The conditioner according to any one of the preceding claims, **characterised in that** said ASIC circuit (10) further comprises at least one resistor (36) for heating said ASIC, which resistor (36) is only activated below a critical temperature of said ASIC.

6. A thermocouple temperature measurement device with digital output, **characterised in that** it comprises at least one measurements conditioner (10) that is constituted by an ASIC circuit encapsulated in a connector (40, 41) according to any one of the preceding claims, said conditioner (10) comprising an input (15, 16) that is connected to a thermocouple (24) and an output (37) that is connected to a digital communication and electrical power supply bus (38).

7. The device according to claim 6, **characterised in that** said connector (41) is moulded onto said bus (38).

8. The device according to claim 6, **characterised in that** said connector (40) is an independent connector that is connected to a connector (41) that is moulded onto said bus (38).

9. The device according to claim 7 or 8, **characterised in that** said bus (38) comprises at least two electric lines (61) that pass through a transversal passage (80) of at least one connector (41) that is moulded onto said bus (38), said moulded connector (41) comprising an ASIC conditioner (10) that is designed to be connected to a thermocouple (24) and each electric line of said bus being connected to the output (37) of said ASIC conditioner (10).

10. The device according to claim 9, **characterised in that** said bus (38) comprises a plurality of regularly spaced moulded connectors (41).

11. The device according to claim 10, **characterised in that** it comprises at least two independent connectors (40) that each comprise an encapsulated ASIC conditioner (10) that is designed to be connected to a thermocouple (24), said two independent connectors being connected together by their additional connection zones (72, 73) and forming a linear chain (51) that is connected to a connector (41) that is moulded onto said bus (38).

12. The device according to claim 10 or 11, **characterised in that** at least one of said connectors (41) that is moulded onto said bus (38) comprises an encapsulated ASIC conditioner (10) that is designed to be connected to a thermocouple (24).

13. The device according to claim 11 or 12, **characterised in that** it comprises at least two linear chains (51) of independent connectors (40), each linear chain (51) being respectively connected to a connector (41) that is moulded onto said bus (38).

14. The device according to any one of claims 7 to 13, **characterised in that** said bus (38) comprises at least one extension (42) onto which at least one additional connector (41) is moulded, the moulded connector of said extension (42) being connected directly to a connector (41) that is moulded onto said bus (38).

15. The device according to any one of claims 7 to 13, **characterised in that** said bus (38) comprises at least one extension (42) onto which at least one additional connector (41) is moulded, the connector that is moulded onto said extension (42) being connected to said bus (38) by means of at least one independent connector (40).

16. The device according to claim 14 or 15, **characterised in that** at least one of said connectors (41) that is moulded onto said extension (42) comprises an encapsulated ASIC conditioner (10) that is designed to be connected to a thermocouple (24).

17. The device according to any one of claims 14 to 16, **characterised in that** said extension (42) comprises at least two electric lines.

18. The device according to any one of claims 6 to 13, **characterised in that** said connectors (40, 41) that include said encapsulated ASIC conditioners (10), said thermocouples (24) that are connected to said connectors (40, 41) and said communication bus (38) are placed in a thermal vacuum case (22).

19. The device according to any one of claims 6 to 18, **characterised in that** said bus (38) is connected to a computer (43) by means of a protocol converter (39).

## Patentansprüche

1. Temperaturmesswertaufbereiter mit zwei Eingängen (74, 75) zum Verbinden mit zwei Adern eines Thermoelements, wobei der Aufbereiter von einer einzigen mikroelektronischen Schaltung gebildet wird, die Mittel (30, 31, 32, 33, 35) zum Aufbereiten von Temperaturmesswerten umfasst, wobei die mikroelektronische Schaltung in einem Verbinder (40, 41) verkapselt ist, **dadurch gekennzeichnet, dass**:
- der Temperaturmesswertaufbereiter vom Typ mit digitalem Ausgang ist;
- die mikroelektronische Schaltung eine spezielle integrierte ASIC-Schaltung (10) ist und die Temperaturmesswertaufbereitungsmittel (30, 31, 32, 33, 35) und die Temperaturmesswertdigitalisierungsmittel (34) gruppiert;
- wobei die spezielle integrierte ASIC-Schaltung (10) zwei zusätzliche Verbindungszonen (72, 73), jeweils eine Steck- und eine Aufnahmezone, zum Verbinden mit anderen Verbindern umfasst;
- die spezielle integrierte ASIC-Schaltung (10) einen Ausgang (37) aufweist, der durch interne elektrische Leitungen (62) mit den zwei zusätzlichen Verbindungszonen verbunden ist.

2. Aufbereiter nach Anspruch 1, **dadurch gekennzeichnet, dass** die ASIC-Schaltung (10) in einer zentralen Zone (71) des Verbinders (40, 41) zwischen den beiden zusätzlichen Verbindungszonen (72, 73) angeordnet ist.

3. Aufbereiter nach Anspruch 2, **dadurch gekennzeichnet, dass** der Verbinder (41) ferner in der die ASIC enthaltenden zentralen Zone (71) einen Querkanal (80) umfasst, der auf beiden Seiten des Verbinders (41) mündet.

4. Aufbereiter nach einem der vorherigen Ansprüche, **dadurch gekennzeichnet, dass** die ASIC-Schaltung (10) eine spezifische umprogrammierbare Adresse und umprogrammierbare interne Parameter hat.

5. Aufbereiter nach einem der vorherigen Ansprüche, **dadurch gekennzeichnet, dass** die ASIC-Schaltung (10) ferner wenigstens einen Widerstand (36) zum Erhitzen der ASIC umfasst, wobei dieser Widerstand (36) nur unterhalb einer kritischen Temperatur der ASIC aktiviert wird.

6. Thermoelement-Temperaturmessvorrichtung mit digitalem Ausgang, **dadurch gekennzeichnet, dass** sie wenigstens einen Messwertaufbereiter (10) umfasst, der von einer in einem Verbinder (40, 41) verkapselten ASIC-Schaltung nach einem der vorherigen Ansprüche gebildet wird, wobei der Aufbereiter (10) einen mit einem Wärmeelement (24) verbundenen Eingang (15, 16) und einen mit einem Digitalkommunikations- und Stromversorgungsbus (38) verbundenen Ausgang (37) umfasst.

7. Vorrichtung nach Anspruch 6, **dadurch gekennzeichnet, dass** der Verbinder (41) auf den Bus (38) geformt ist.

8. Vorrichtung nach Anspruch 6, **dadurch gekennzeichnet, dass** der Verbinder (40) ein unabhängiger Verbinder ist, der mit einem auf den Bus (38) geformten Verbinder (41) verbunden ist.

9. Vorrichtung nach Anspruch 7 oder 8, **dadurch gekennzeichnet, dass** der Bus (38) wenigstens zwei elektrische Leitungen (61) umfasst, die durch einen Querkanal (80) von wenigstens einem auf den Bus (38) geformten Verbinder (41) verlaufen, wobei der geformte Verbinder (41) einen ASIC-Aufbereiter (10) zum Verbinden mit einem Wärmeelement (24) umfasst und wobei jede elektrische Leitung des Busses mit dem Ausgang (37) des ASIC-Aufbereiters (10) verbunden ist.

10. Vorrichtung nach Anspruch 9, **dadurch gekennzeichnet, dass** der Bus (38) mehrere regelmäßig beabstandete geformte Verbinder (41) umfasst.

11. Vorrichtung nach Anspruch 10, **dadurch gekennzeichnet, dass** sie wenigstens zwei unabhängige Verbinder (40) umfasst, die jeweils einen verkapselten ASIC-Aufbereiter (10) zum Verbinden mit einem Wärmeelement (24) umfassen, wobei die beiden unabhängigen Verbinder durch ihre zusätzlichen Verbindungszonen (72, 73) miteinander verbunden sind und eine lineare Kette (51) bilden, die mit einem auf den Bus (38) geformten Verbinder (41) verbunden ist.

12. Vorrichtung nach Anspruch 10 oder 11, **dadurch gekennzeichnet, dass** wenigstens einer der auf den Bus (38) geformten Verbinder (41) einen verkapselten ASIC-Aufbereiter (10) zum Verbinden mit einem Wärmeelement (24) umfasst.

13. Vorrichtung nach Anspruch 11 oder 12, **dadurch gekennzeichnet, dass** sie wenigstens zwei lineare Ketten (51) von unabhängigen Verbindern (40) umfasst, wobei jede lineare Kette (51) jeweils mit einem auf den Bus (38) geformten Verbinder (41) verbunden ist.

14. Vorrichtung nach einem der Ansprüche 7 bis 13, **dadurch gekennzeichnet, dass** der Bus (38) wenigstens eine Verlängerung (42) umfasst, auf die wenigstens ein zusätzlicher Verbinder (41) geformt ist, wobei der geformte Verbinder der Verlängerung (42) direkt mit einem auf den Bus (38) geformten Verbinder (41) verbunden ist.

15. Vorrichtung nach einem der Ansprüche 7 bis 13, **dadurch gekennzeichnet, dass** der Bus (38) wenigstens eine Verlängerung (42) umfasst, auf die wenigstens ein zusätzlicher Verbinder (41) geformt ist, wobei der auf die Verlängerung (42) geformte Verbinder mit dem Bus (38) mittels wenigstens eines unabhängigen Verbinders (40) geformt ist.

16. Vorrichtung nach Anspruch 14 oder 15, **dadurch gekennzeichnet, dass** wenigstens einer der auf die Verlängerung (42) geformten Verbinder (41) einen verkapselten ASIC-Aufbereiter (10) zum Verbinden mit einem Wärmeelement (24) umfasst.

17. Vorrichtung nach einem der Ansprüche 14 bis 16, **dadurch gekennzeichnet, dass** die Verlängerung (42) wenigstens zwei elektrische Leitungen umfasst.

18. Vorrichtung nach einem der Ansprüche 6 bis 13, **dadurch gekennzeichnet, dass** sich die die verkapselten ASIC-Aufbereiter (10) aufweisenden Verbinder (40, 41), die mit den Verbindern (40, 41) verbundenen Wärmeelemente (24) und der Kommunikationsbus (38) in einem thermischen Vakuumkasten (22) befinden.

19. Vorrichtung nach einem der Ansprüche 6 bis 18, **dadurch gekennzeichnet, dass** der Bus (38) mittels eines Protokollwandlers (39) mit einem Computer (43) verbunden ist.
